# EUROPÄISCHE PATENTSCHRIFT

(11) **EP 1 406 719 B1**
(45) Veröffentlichungstag und Bekanntmachung des Hinweises auf die Patenterteilung: **21.12.2005**
(21) Anmeldenummer: 02724311.2
(22) Anmeldetag: 13.05.2002
(51) Int. Cl.: B01D 53/54, B01D 53/86

(54) **VERFAHREN ZUM BEHANDELN VON AMMONIAKHALTIGEN RAUCHGASEN**
METHOD FOR TREATING FLUE GASES CONTAINING AMMONIA
PROCEDE DE TRAITEMENT DE GAZ DE FUMEE CONTENANT DE L'AMMONIAC

(30) Priorität: 14.05.2001 DE 10123402
(43) Veröffentlichungstag der Anmeldung: 14.04.2004
(73) Patentinhaber: Frauenhofer-Gesellschaft zur Förderung der angewandten Forschung e.V., 80686 München (DE); TODA KOGYO CORPORATION, Hiroshima-shi, Hiroshima 732-0824 (JP)
(72) Erfinder: WOLF, Christian, 44388 Dortmund (DE); KELDENICH, Kai, 45134 Essen (DE); MARZI, Thomas, 47249 Duisburg (DE); TODA, Tetsuro, 40210 Düsseldorf (DE); IMAI, Tomoyuki, Otake-city, Hiroshima 739-0652 (JP)
(74) Vertreter: Olgemöller, Luitgard Maria
(86) Internationale Anmeldenummer: PCT/EP2002/005247
(87) Internationale Veröffentlichungsnummer: WO 2002/092195

(56) Entgegenhaltungen:
- EP-A- 0 290 947
- EP-A- 0 514 729
- DE-A- 19 652 902
- FR-A- 2 773 144
- US-A- 2 017 428
- US-A- 2 161 746
- US-A- 4 273 749
- SADYKOV V A ET AL: "Oxide catalysts for ammonia oxidation in nitric acid production: properties and perspectives" , APPLIED CATALYSIS A: GENERAL, ELSEVIER SCIENCE, AMSTERDAM, NL, VOL. 204, NR. 1, PAGE(S) 59-87 XP004272518 ISSN: 0926-860X Seite 62, Absatz 3 -Seite 77

## Beschreibung

Die vorliegende Erfindung betrifft ein Verfahren zum Behandeln von Rauchgasen, die bei der Verbrennung von gasförmigen, festen oder flüssigen Brennstoffen und einer nachgeschalteten Behandlung nach dem SNCR-Verfahren entstehen.

Stickoxide, aber auch Ammoniak sind Verbindungen, die in der Abluft von Verbrennungsprozessen nicht erwünscht sind, da sie die Umwelt belasten und teilweise vergiften. Stickoxide (NOₓ) fallen prozessintem bei der Verbrennung stickstoffhaltiger Materialien an. Für die Menge an tolerierbarem NOₓ-Gas gibt es seit langem gesetzliche Grenzwerte. Damit diese eingehalten werden können, wird üblicherweise ein erheblicher verfahrenstechnischer Aufwand betrieben, um die entstehenden Gase wieder aus dem Rauchgas zu entfernen. Auf die Anwesenheit von Ammoniak und ammoniakalischen Verbindungen wurde dagegen nur wenig geachtet, unter anderem weil die Einhaltung von gasseitigen Grenzwerten bisher nicht gesetzlich festgeschrieben war.

Ein häufig angewendetes Verfahren zur Verminderung des Stickoxidgehaltes ist die selektive nichtkatalytische Entstickung (SNCR) von Rauchgasen durch die Eindüsung von NH-haltigen Reduktionsmitteln (z.B. Ammoniakwasser, Ammoniak bildenden Verbindungen oder Aminen) in einem festen Temperaturfenster. Die DE AS 24 11 672 der Exxon Research and Engineering Co. beschreibt dieses Verfahren. Dabei wird eine definierte Menge an Ammoniak oder einer Ammoniakvorstufe (z.B. Ammoniakwasser) in Gegenwart von Sauerstoff bei 870°C-1095°C (in der Praxis ist ein Temperaturfenster von 950°C-1.150°C üblich) mit dem stickoxidhaltigen Rauchgas in Kontakt gebracht, sofern in Abwesenheit weiterer Reduktionsmittel gearbeitet wird. Der Mengenbereich wird mit 0,4 bis 10 Mol Ammoniak pro Mol Stickstoffmonoxid angegeben. Bei solch hohen Temperaturen wird auch ohne Gegenwart eines zusätzlichen Katalysators das NOₓ zu Stickstoff reduziert, während der Ammoniak oder die NH-haltige Verbindung zu N₂ und Wasser oxidiert wird. Allerdings wird das NH-haltige Reduktionsmittel in der Praxis immer in überstöchiometrischen Mengen zugesetzt.

Durch den Einsatz überstöchiometrischer Mengen an NH-haltigem Reduktionsmittel für das NOₓ ist ein Schlupf an dabei entstehendem oder verbleibendem Ammoniak nicht zu vermeiden. Dieser Ammoniakschlupf kann zu Probemen bei der weiteren Behandlung des Rauchgases führen, da das Ammoniak z.B. im Waschwasser eines nassen Rauchgaswäschers abgeschieden wird oder sich adsorptiv an abgeschiedenen festen Reststoffen bindet. Die Qualitäten der festen Rückstände sinken dadurch ab, da Ammoniak an den Lagerstätten desorbieren und die Luftqualität verschlechtern kann.

Neben dem SNCR-Verfahren ist auch das SCR-Verfahren verbreitet. Hierbei wird ein stationärer Katalysator in einem Bereich des Rauchgasabzugs oder Kessels vorgesehen, der eine wesentlich niedrigere Temperatur (ca. 300°C) aufweist; sowohl ungereinigtes als auch vorgereinigten Rauchgas kann mit diesem Katalysator behandelt werden. SCR-Katalysatoren sind in der Regel Wabenkatalysatoren, die im wesentlichen aus Titan-, Vanadium- oder anderen Übergangsmetalloxiden bestehen.

In jüngerer Zeit wurde ein neuartiges Verfahren zur Reduktion von überstöchiometrischem Ammoniak bei Anwendung des SNCR-Verfahren publiziert, in dem der NOₓ-Reduktion ein sogenannter Schlupfkatalysator in High-Dust-Schaltung (d.h. im Bereich des noch nicht entstaubten Rauchgases) nachgeschaltet ist, der in einem Temperaturfenster von ca. 400-200°C angeordnet wird. Dieses Verfahren soll im Müllheizkraftwerk Mainz angewandt werden, dessen Bau im Oktober 1999 in Auftrag gegeben wurde; es soll insbesondere für Müllverbrennungsanlagen geeignet sein. Allerdings hat es den Nachteil, dass der Katalysator aufgrund der hohen möglichen Staubanteile im Rauchgas an der vorgesehenen Stelle zum Verbacken und Verstopfen neigt. Außerdem können die sauren Bestandteile oder Schwermetalle im Rauchgas den Katalysator vergiften, so dass er seine Funktionsfähigkeit einbüßt.

Aufgabe der vorliegenden Erfindung ist die Bereitstellung eines Verfahrens, mit dem ammoniakalische Bestandteile eines mit dem SNCR-Verfahren behandelten Rauchgases aus diesem entfernt werden.

Diese Aufgabe wird dadurch gelöst, dass das Rauchgas in einem Temperaturfenster, das deutlich (mindestens 150°C) unterhalb von demjenigen liegt, in dem das SNCR-Verfahren heute angewendet wird, vorzugsweise im Bereich von 700-400°C, mit einem ferro-oxidischen Katalysator in Kontakt gebracht wird, der eine spezifische Oberfläche von mindestens 0,2 m²/g, gemessen nach der BET-Methode (Meffert und Langenfeld, Z. Anal. Chem. 238 (1968), 187-193), aufweist.

Durch die Zugabe eines Eisenoxid-Katalysators mit sehr hoher spezifischer Oberfläche an einem Ort des Rauchgasabzugs, der der Zudüsung des ammoniakalischen Reduktionsmittels nachgeschaltet ist, wird erreicht, dass überschüssiger Ammoniak auch bei vergleichsweise niedrigen Temperaturen vollständig zu N₂ und H₂O umgesetzt wird. Der zugefügte Katalysator ist dabei in der Lage, in einer Festkörper-Kontaktreaktion am Feststoff gebundenen Sauerstoff an gasförmige Substanzen abzugeben und sich durch Aufnahme von Sauerstoff aus dem Rauchgas wieder zu regenerieren.

Sauerstoff ist im die Brennkammer verlassenden Rauchgas häufig noch vorhanden, z.B. in Form von Sauerstoff, der in der primären Verbrennungsluft enthalten war, die zur Unterhaltung des Brennprozesses in die Brennkammer eingedüst wird. Außerdem wird den aufsteigenden Verbrennungsgasen üblicherweise nochmals Luft zugedüst (sogenannte Sekundär- oder Tertiärluft), um nicht vollständig umgesetzte Rauchgase nachzuverbrennen. Dies kann im sich an den Brennraum anschließenden Rauchgaskanal, z.B. an einer Einschnürung erfolgen; auch andere Mischmedien wie vorgespannter Dampf oder rezirkuliertes Rauchgas können zugesetzt werden, wie es im Stand der Technik bekannt ist. Diese Techniken dienen neben der Zuführung weiteren Sauerstoffs einer Verbesserung der Durchmischung, um Rauchgase, die noch nicht vollständig ausgebrannt sind, besser mit Sauerstoff in Kontakt zu bringen.

Vorzugsweise besitzt der ferro-oxidische Katalysator der vorliegenden Erfindung eine spezifische Oberfläche im Bereich von 0,2 bis 200 m²/g, vorzugsweise von mehr als 2 m²/g, stärker bevorzugt von mehr als 20 m²/g. Ein hohe spezifische Oberfläche ist günstig, da damit die benötigte Menge an Katalysator gesenkt werden kann. Neben Effekten wie möglicherweise unerwünschter Temperaturabsenkung oder dem Erfordernis, den Katalysator vorzuheizen, die sich bei zunehmender Menge an Katalysator nachteilig auswirken, ist eine geringe Katalysatormenge auch aus Kostengründen vorteilhaft, da im Verfahren ausgetragener Katalysator in der Regel nicht zurückgewonnen werden kann.

Um die erwähnte große spezifische Oberfläche zu bewirken, ist es bevorzugt, dass die Katalysatorpartikel möglichst klein sind. Auch die Verteilbarkeit des Katalysators wird dadurch verbessert. Geeignet sind Partikelgrößen im Bereich von etwa 0,01 µm oder darüber, vorzugsweise sollten sie 2 µm nicht übersteigen. Besonders günstig sind Partikel im Größenbereich zwischen 0,1 und 20 µm.

Weiterhin ist es bevorzugt, dass der Katalysator nur wenig Verunreinigungen besitzt. Bevorzugt liegt der Anteil an Phosphor unter 0,02 Gew.-%, der Anteil an Schwefel unter 0,6 Gew.% und der Anteil an Natrium unter 0,5 Gew.-%.

Die einzusetzende Menge an Katalysator hängt vor allem von der gewählten Stöchiometrie des SNCR-Verfahrens und den geometrischen Randbedingungen am Eindüsort ab. Ein geeigneter Mengenbereich liegt zwischen 0,01 und 0,5 g/Nm³ Rauchgas.

Vorzugsweise ist der Katalysator so beschaffen, dass er mindestens 15 % Kohlenmonoxid in Kohlendioxid konvertieren kann, wenn 2,8 x 10⁻⁴ mol Katalysator nach 15-minütiger Wärmeeinwirkung unter Kontakt mit Luft bei 800°C umgehend mit 6,1 x 10⁻⁷ mol Kohlenmonoxid bei 250°C bei einer Raumgeschwindigkeit von 42.400 h⁻¹ in einer inerten Atmosphäre in einem pulsierenden katalytischen Reaktor in Kontakt kommen.

Die Zugabe des Katalysators zum Rauchgas sollte vorzugsweise in einem Temperaturfenster erfolgen, bei dem das Rauchgas 700-400°C heiß ist. In diesem Bereich wird vorhandener Ammoniak bzw. ein NH-haltiges Medium vollständig abgebaut, während möglicherweise noch vorhandenes NOₓ weiter reduziert wird. Wird die Obergrenze dieses Bereichs überschritten, besteht die Gefahr, dass der Ammoniak zu Stickstoffmonoxid durchoxidiert wird. Bei niedrigen Temperaturen nimmt die Effektivität der Umsetzung ab.

Der Katalysator wird vorzugsweise mit Hilfe eines Trägermediums aus Druckluft oder trockenem Dampf in den Rauchgaskanal eingedüst. Es sind aber auch andere Trägermedien möglich wie beispielsweise rezirkuliertes Rauchgas.

Das Verfahren eignet sich für alle Verbrennungsverfahren, vorzugsweise Verfahren zum Verbrennen heterogener Feststoffe, wie sie in Müll- und Reststoffverbrennungsanlagen sowie Biomassekraftwerken zur Anwendung gelangen, bei denen Stickoxide im Rauchgas mit Hilfe des SNCR-Verfahrens minimiert bzw. entfernt werden sollen.

Durch Eindüsung des Katalysators wird der Ammoniakschlupf im Rauchgas vollständig oder zum größten Teil abgebaut und in schadlose Komponenten umgesetzt. Dadurch werden nachfolgende Prozesse nicht durch den unerwünschten Ammoniak behindert bzw. in ihrem Wirkungsgrad verschlechtert.

Vorzugsweise wird das efindungsgemäße Verfahren ausgeführt, indem an einem geeigneten Ort im Rauchgaszug zunächst in bekannter Weise die Stickoxidkonzentration im Rauchgas gemessen wird. Anhand der gemessenen Konzentration wird die für das SNCR-Verfahren einzusetzende Menge an Ammoniak oder einem anderen NH-haltigem Medium bemessen, wobei die Stöchiometrie im Vorfeld festgelegt wird. Über eine Temperaturmessung im Bereich der Eindüsung des Reduktionsmittels wird der optimale Ort bestimmt, der sich aus den Vorgaben für das oben beschriebene Temperaturfenster im SNCR-Verfahren ergibt.

Anhand der gewählten bzw. vorgegebenen Prozessparameter wird sodann erfindungsgemäß die Menge an einzudüsendem Katalysator bestimmt, z.B. anhand der gewählten Stöchiometrie im SNCR-Verfahren. Diese wird am gewählten Ort dem Rauchgas injiziert. Als gasförmiges Trägermedium für den feinteiligen Feststoff wird vorzugsweise Druckluft bzw. trockener Dampf, aber auch rezirkuliertes Rauchgas genutzt.

In Abhängigkeit von der Querschnittsfläche des Rauchgaszuges am Injektionsort werden vorzugsweise zwei (gegebenenfalls auch noch mehr) Injektoren genutzt, auch wenn in einigen Fällen nur ein Injektor ausreichend ist, um die benötigte vollständige Einmischung bei minimaler Trägergasmenge in das Rauchgas zu erzielen.

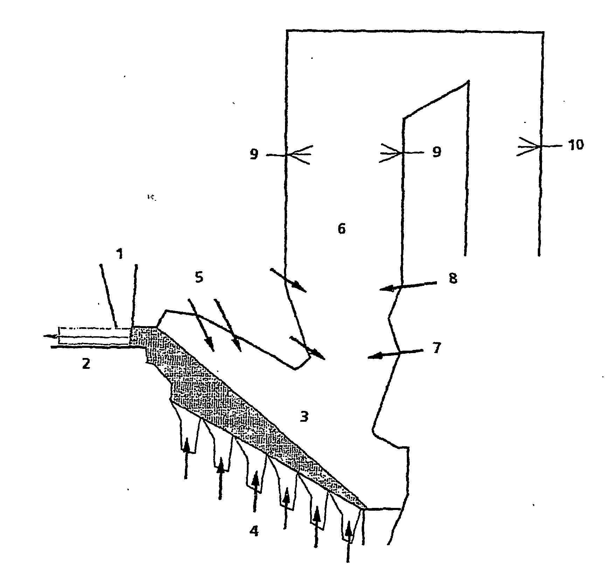

In **Figur 1** wird das Schema einer Verbrennung mit Rauchgasbehandlung gezeigt, anhand dessen das erfindungsgemäße Verfahren näher erläutert werden soll. Die dargestellten Verhältnisse sind nur als Beispiel vorgesehen und sollen den Gegenstand der Erfindung in keiner Weise beschränken.

Figur 1 stellt einen Verbrennungsprozess dar, bei dem Abfall als Brennstoff aufgegeben wird (1). Durch einen Aufgabeschieber (2) wird der Brennstoff in die Brennkammer (3) geschoben. Dort wird der Brennstoff unter Zuführung von primärer Verbrennungsluft (4) verbrannt. Die aus dem Feststoffbett aufsteigenden Verbrennungsprodukte können durch die gezielte Zugabe von Mischmedien (5) innig miteinander vermischt werden. Nach der Vermischung erfolgt im Übergang von Brennkammer zum Feuerraum (6) eine Eindüsung von weiterer Verbrennungsluft (Sekundärluft 7 bzw. Tertiärluft 8). Im nachfolgenden Bereich des Rauchgaszuges (9) wird an einem Ort geeigneter Temperatur das SNCR-Verfahren durchgeführt, indem Ammoniak oder eine andere NH-haltige Verbindung appliziert wird. Der Katalysator kann im weiteren Verlauf des Rauchgaszuges bzw. des Kessels (10) dem Rauchgas hinzugefügt (eingedüst) werden. Der Ort der Katalysator-Zugabe ist von den räumlichen Gegebenheiten her nicht kritisch, er wird ausschließlich oder vor allem in Hinblick auf die herrschenden Temperaturen gewählt, um den Kriterien des wünschenswerten Temperaturfensters zu genügen. Einzig notwendig einzuhaltendes Kriterium ist, dass der Ort der Zugabe des Katalysators in ausreichendem Abstand zum Ort der SNCR-Stickoxidreduktion liegt, um sicherzustellen, dass der Ammoniakschlupf aus diesem Verfahren vollständig am Katalysator umgesetzt wird.

## Patentansprüche

1. Verfahren zum Entfernen von ammoniakalischen Bestandteilen aus einem nach dem SNCR-Verfahren behandelten Rauchgas, **dadurch gekennzeichnet, dass** das Rauchgas bei einer Temperatur, die mindestens 150°C unterhalb von derjenigen liegt, in der das SNCR-Verfahren angewendet wird, mit einem ferro-oxidischen Katalysator in Kontakt gebracht wird, der eine spezifische Oberfläche von mindestens 0,2 m²/g, gemessen nach der BET-Methode, aufweist.

2. Verfahren nach Anspruch 1, **dadurch gekennzeichnet, daß** der Katalysator dem Rauchgas bei einer Temperatur von 700-400°C des Gases im Rauchkanal zugesetzt wird.

3. Verfahren nach Anspruch 1 oder 2, **dadurch gekennzeichnet, dass** der Katalysator mit Hilfe eines Trägermediums aus Druckluft, trockenem Dampf oder rezirkuliertem Rauchgas eingedüst wird.

4. Verfahren nach einem der voranstehenden Ansprüche, **dadurch gekennzeichnet, dass** der ferro-oxidische Katalysator eine spezifische Oberfläche im Bereich von 0,2 bis 200 m²/g, vorzugsweise von mehr als 2 m²/g, stärker bevorzugt von mehr als 20 m²/g aufweist.

5. Verfahren nach einem der voranstehenden Ansprüche, **dadurch gekennzeichnet, dass** der Anteil an Phosphor im ferro-oxidischen Katalysator unter 0,02 Gew.-%, der Anteil an Schwefel darin unter 0,6 Gew.-% und der Anteil an Natrium darin unter 0,5 Gew.-% liegt.

6. Verfahren nach einem der voranstehenden Ansprüche, **dadurch gekennzeichnet, dass** der Katalysator mindestens 15 % Kohlenmonoxid in Kohlendioxid konvertieren kann, wenn 2,8 x 10⁻⁴ mol Katalysator nach 15-minütiger Wärmeeinwirkung unter Kontakt mit Luft bei 800°C umgehend mit 6,1 x 10⁻⁷ mol Kohlenmonoxid bei 250°C bei einer Raumgeschwindigkeit von 42.400 h⁻¹ in einer inerten Atmosphäre in einem pulsierenden katalytischen Reaktor in Kontakt kommt.

## Claims

1. Process for removing ammoniacal constituents from a flue gas treated by the SNCR process, **characterised in that** the flue gas is brought into contact with a ferro-oxidic catalyst at a temperature which lies at least 150°C below that at which the SNCR process is applied, which catalyst has a specific surface area of at least 0.2 m²/g, measured by the BET method.

2. Process according to claim 1, **characterised in that** the catalyst is added to the flue gas at a temperature of 700-400°C of the gas in the flue channel.

3. Process according to claim 1 or 2, **characterised in that** the catalyst is injected with the aid of a carrier medium comprising compressed air, dry steam or recirculated flue gas.

4. Process according to one of the preceding claims, **characterised in that** the ferro-oxidic catalyst has a specific surface area in the range from 0.2 to 200 m²/g, preferably of more than 2 m²/g, more preferably of more than 20 m²/g.

5. Process according to one of the preceding claims, **characterised in that** the proportion of phosphorus in the ferro-oxidic catalyst lies below 0.02 wt.%, the proportion of sulphur therein below 0.6 wt.% and the proportion of sodium therein below 0.5 wt.%.

6. Process according to one of the preceding claims, **characterised in that** the catalyst may convert at least 15 % of carbon monoxide into carbon dioxide when 2.8 x 10⁻⁴ moles of catalyst after 15 minutes of heat treatment on contact with air at 800°C comes into contact immediately with 6.1 × 10⁻⁷ moles of carbon monoxide at 250°C at a space velocity of 42,400 h⁻¹ in an inert atmosphere in a pulsating catalytic reactor.

## Revendications

1. Procédé d'élimination de constituants ammoniacaux de fumées traités par le procédé SNCR, **caractérisé en ce que** les fumées sont mises en contact, à une température inférieure d'au moins 150°C à celle à laquelle le procédé SNCR est mis en oeuvre, avec un catalyseur à l'oxyde ferreux qui présente une surface spécifique d'au moins 0,2 m²/g, mesurée selon la méthode BET.

2. Procédé suivant la revendication 1, **caractérisé en ce que** le catalyseur est ajouté aux fumées à une température de 700-400°C du gaz dans le canal des fumées.

3. Procédé suivant la revendication 1 ou 2, **caractérisé en ce que** le catalyseur est injecté par une buse à l'aide d'un fluide porteur formé d'air comprimé, de vapeur sèche ou de fumées recyclées.

4. Procédé suivant l'une des revendications précédentes, **caractérisé en ce que** le catalyseur à l'oxyde ferreux présente une surface spécifique comprise dans la plage de 0,2 à 200 m²/g, avantageusement de plus de 2 m²/g, plus avantageusement de plus de 20 m²/g.

5. Procédé suivant l'une des revendications précédentes, **caractérisé en ce que** la proportion de phosphore dans le catalyseur à l'oxyde ferreux est inférieure à 0,02 % en poids, la proportion de soufre y est inférieure à 0,6 % en poids et la proportion de sodium y est inférieure à 0,5 % en poids.

6. Procédé suivant l'une des revendications précédentes, **caractérisé en ce que** le catalyseur peut convertir au moins 15 % de monoxyde de carbone en dioxyde de carbone lorsqu'une quantité de 2,8 x 10⁻⁴ moles de catalyseur, après une durée d'action de la chaleur de 15 minutes au contact d'air à 800°C, entre immédiatement en contact avec 6,1 x 10⁻⁷ moles de monoxyde de carbone à 250°C à une vitesse spatiale de 42 400 h⁻¹ en atmosphère inerte dans un réacteur catalytique pulsé.
